# EUROPEAN PATENT SPECIFICATION

(11) **EP 1 120 226 B1**
(45) Date of publication and mention of the grant of the patent: **05.03.2003**
(21) Application number: 01200227.5
(22) Date of filing: 22.01.2001
(51) Int. Cl.: B29C 65/54, F16B 11/00

(54) **Method for connecting two plastic profiles**
Verfahren zum Verbinden von zwei Kunststoffprofilen
Procédé de liaison de deux profilés en matière plastique

(30) Priority: 26.01.2000 BE 200000061
(43) Date of publication of application: 01.08.2001
(73) Proprietor: N.V. BEKAERT S.A., 8550 Zwevegem (BE)
(72) Inventor: Moussiaux, Eric, 1500 Halle (BE)
(74) Representative: Demeester, Gabriel

(56) References cited:
- EP-A- 0 549 277
- FR-A- 2 759 111
- US-A- 2 678 853
- US-A- 5 494 370

## Description

The present invention relates to a method for connecting two plastic profiles.

It is common knowledge to manufacture all sorts of plastic profiles. High-resistant plastic profiles are obtained by using a plastic material manufactured by pultrusion, in which process a thermosetting resin is applied by immersion on a continuous trajectory of longitudinal reinforcement fibres, after which reinforcement fibre mats providing cross reinforcement are applied, followed by a covering with a protective surface membrane. This composition is moulded in a moulding mold that simultaneously functions as a hardening station for the plastic material. The product coming out of the mold is completely cured and can be drawn cut to size from the installation. Such pultrusion methods allow to manufacture all shapes of profiles, such as U-sections, T-profiles, I-profiles, L-profiles and O-profiles, known under the brand name UTILO® profiles of the applicant N.V. BEKAERT S.A.

In a preferable embodiment of the invention, the hardened plastic profiles are reinforced with 25 to 75 percent by weight reinforcement fibres. The percent by weight reinforcement fibres is based on the total weight of the hardened plastic material and reinforcement fibres. It was found that by using reinforcement fibres of an appropriate type in a proportion of 25 to 75 percent by weight in relation to the total weight, an optimal combination of features of the plastic profiles is obtained.

In principle, the plastic profiles can be manufactured in all kinds of hardenable plastic materials; excellent results are obtained for plastic profiles manufactured from fibre-reinforced thermosetting polymeres, especially vinyl ester resin and isophtalic polyester resin.

All common types of reinforcement fibres can be used, such as e.g. glass fibre, nylon fibre, aramid fibre, mineral fibre and many others ; from an economical point of view, glass fibre is preferred.

Such high-resistant, hardened plastic profiles show a large number of advantages in relation to the classic steel profiles. They are amongst others rustproof and have a lower specific gravity than steel. Therefore, they are extremely well-fit for certain applications.

A disadvantage of these strong, hardened plastic profiles in relation to steel profiles is that it is rather difficult to firmly connect these plastic profiles; as can be done by welding steel profiles.

To firmly connect two plastic profiles, it is usually required to make holes in the profiles to connect them with bolts and nuts. It is obvious that this is a time-consuming manipulation, necessitating additional means. FR 2 759 111 and EP 0 549 277 describe other methods for connecting plastic profiles covering the preamble of claim 1.

It is an object of the invention to provide for a new method to connect two plastic profiles ; only using a glue to connect the profiles and resulting in an extremely strong connection.

A method according to the invention is disclosed in claim 1.

The invention will now be described into more detail with reference to the accompanying drawings wherein :
- FIGURE 1 shows, in perspective, parts of the two plastic profiles to be connected before they are inserted into one another where the connection has to be made ;
- FIGURE 2 shows, in perspective, parts of two plastic profiles to be connected before they are pressed against each other where the connection has to be made ; and
- FIGURE 3 shows, in perspective and on a larger scale, the glue connection made between the two plastic profiles, shown in figures 1 and 2.

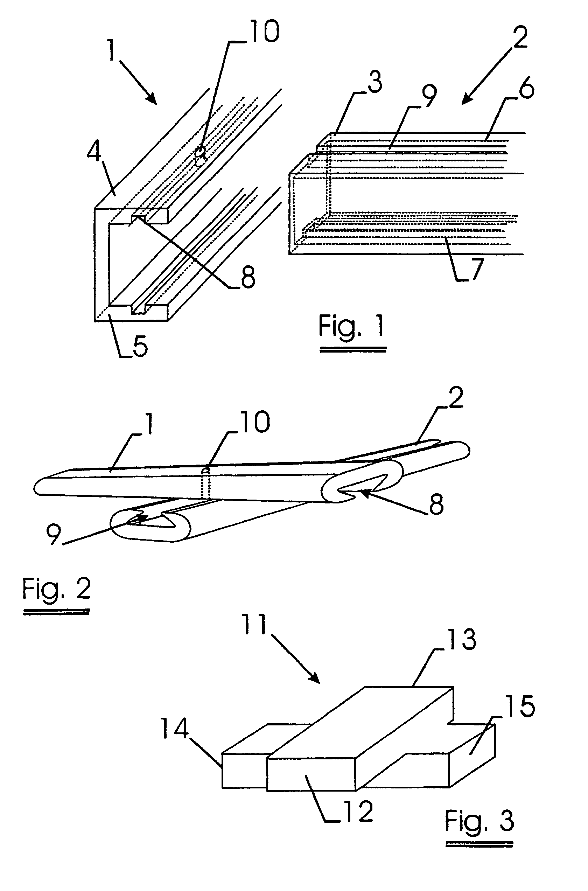

Figure 1 shows two plastic profiles 1 and 2, that have to be connected by putting the end 3 of the beam-shaped profile 2 between the legs 4 and 5 of the U-section 1. It is clear that the dimensions of profile 1 are adapted to the dimensions of profile 2 or the distance between the legs 4 and 5 of the U-shaped profile 1 is nearly equal to the distance between the surfaces 6 and 7 of the beam-shaped profile 2.

According to the invention, each plastic profile has a longitudinal groove where the connection has to be made. As figure 1 shows, the two plastic profiles 1 and 2 have a longitudinal groove 8, resp. 9, where the glue connection has to be made.

Preferably, the longitudinal grooves 8 and 9 are made during the pultrusion of the moulded plastic profiles 1 and 2 by guaranteeing that the moulding mold of the profiles 1 and 2 has the appropriate cross section. The cross section of the longitudinal grooves 8 and 9 might e.g. be rectangular, but the cross section can also be dovetailed or trapezoidal.

It is obvious that, by inserting at substantially right angles the two plastic profiles 1 and 2, represented in figure 1, where the connection has to be made, a hollow space, such as represented in figure 3 on a larger scale, is created between both profiles 1 and 2. Now, it is possible to inject the appropriate quantity of glue through the longitudinal groove 9 in the created hollow space. It is also possible to make a small bore 10 in the profile 1 and to inject the appropriate quantity of glue through this bore 10 in the hollow space 11 created between the profiles 1 and 2.

Figure 2 shows two plastic profiles 1 and 2, that have to be connected to each other. The same reference numbers show the same parts as learned in figure 1 and have the same function. As shown, the two profiles 1 and 2 have at least one longitudinal groove 8, resp. 9.

The two plastic profiles 1 and 2 are now placed at substantially right angles and pressed against each other. It is now again possible to inject the appropriate quantity of glue through the longitudinal groove 9 in the created hollow space. It is also possible to make a small bore 10 in the profile 1 and to inject the appropriate quantity of glue through this bore 10 in the hollow space 11 created between the profiles 1 and 2.

Figure 3 shows on a larger scale the hollow space or theoretically shaped glue connection 11 between the plastic profiles 1 and 2. The ends 12, 13, 14 and 15 of the glue connection 11 will have a more flown out shape.

## Claims

1. Method for connecting two plastic profiles (1, 2), **characterized in that** two plastic profiles (1, 2), each of the plastic profiles (1, 2) having at least one longitudinal groove (8,9), are taken, that the two plastic profiles (1, 2) are inserted into each other or are pressed against each other so that the grooves (8, 9) are placed at substantially right angles to one another where the connection has to be made and that the created hollow space (11) in the grooves (8, 9) between the two profiles (1, 2) is filled with glue.

## Patentansprüche

1. Verfahren zur Verbindung von zwei Kunststoffprofilen (1, 2), **dadurch gekennzeichnet, dass** zwei Kunststoffprofile (1, 2) gebraucht werden, wovon jedes einzelne Kunststoffprofil in der Längsrichtung mindestens eine Nut aufweist (8, 9); dass die zwei Kunststoffprofile (1, 2) ineinander geschoben oder aneinander gedrückt werden, so dass sich die Nuten (8, 9) an der Stelle, wo die Verbindung gemacht werden muss, eine der anderen grundsätzlich rechtwinklig gegenüberstehen und dass der in dieser Weise zwischen den beiden Profilen (1, 2) in den Nuten (8, 9) hergestellte Hohlraum (11) mit Klebstoff verfüllt wird.

## Revendications

1. Procédé d'assemblage de deux profilés en plastique (1, 2), **caractérisé en ce qu'**on prend deux profilés en plastique (1, 2), chacun desdits profilés en plastique (1, 2) présentant au moins une rainure longitudinale (8, 9), **en ce que** les deux profilés en plastique (1, 2) sont insérés l'un dans l'autre ou pressés l'un contre l'autre, de sorte que les rainures (8, 9) forment entre elles un angle substantiellement droit à l'endroit où l'assemblage doit être réalisé, et **en ce que** l'espace vide (11) dans les rainures (8, 9) entre les deux profilés (1, 2) est rempli de colle.
